# EUROPEAN PATENT SPECIFICATION

(11) **EP 2 008 862 B1**
(45) Date of publication and mention of the grant of the patent: **23.04.2014**
(21) Application number: 08252125.3
(22) Date of filing: 19.06.2008
(51) Int. Cl.: B60N 2/015, H04B 5/00

(54) **Vehicle seat interconnect, method and vehicle seat data system**
Verfahren zur Verbindung von Sitzen eines Fahrzeugs, und Datensystem für Fahrzeugsitzen
Procédé d'interconnecter des sièges d'un véhicule, et système de données pour sièges de véhicules

(30) Priority: 28.06.2007 GB 0712574
(43) Date of publication of application: 31.12.2008
(73) Proprietor: Tyco Electronics UK Ltd., Swindon SN3 5HH (GB)
(72) Inventor: Furio Miguel Angel, 92370 Chalvielle (FR); Koppe Christian, 64665 Alsbach-Hahnlein (DE); Kainthaje Ramachandra, Shivaprakash, Bangalore 560048 (IN); Hegde Kundapur, Niranjan, Bangalore 560011 (IN)
(74) Representative: Greenwood, Matthew David

(56) References cited:
- EP-A2- 0 279 608
- US-A- 4 428 078
- US-A- 5 230 085
- US-A1- 2004 098 745
- US-A1- 2006 234 700

## Description

### FIELD OF THE INVENTION

The present invention relates to a vehicle seat data interconnect, a method and a vehicle seat data system.

### BACKGROUND OF THE INVENTION

In a vehicle which has multiple seats such as, for example, an aircraft, a bus or a coach, the seats are typically provided in rows. Where an in-vehicle entertainment system is provided each row of seats typically needs to be coupled to that entertainment system. Each seat will typically have control devices for controlling the entertainment system, as well as audio devices for transmitting or receiving audio data. The visual display units are generally mounted in the back of each seat and so the user will operate the visual display unit mounted in the back of the seat in front of him.

Hence, it is know to "daisy chain" a row of seats with the row of seats to its front and rear. A cable harness is provided with couples the rows of seats together. These cable harnesses typically attach to a seat distribution box provided for each row of seats, with the cables running in conduits under the floor between the rows of seats.

To enable the distance between rows of seats (known as the "pitch") to be altered, seat rails are provided which are fixed to the floor of the vehicle and which receive the seat legs. The seats can be positioned in the desired location along the seat rails and then fixed in place. Once in place, the cable harness runs from the seat distribution box and into a cavity provided by the seat rail. The cable harness then exits the seat rail near the adjacent row and couples to its seat distribution box. The cavity is typically covered by an extrusion to protect the cable harness therein. Hence, rows of seats are coupled together to enable control of the entertainment system to be achieved and the cabling is neatly concealed within the seat rail.

When it is desired to change the pitch of the seats it is necessary to remove the extrusion protecting the cable harness, to uncouple the cable harness from the seat distribution boxes and to withdraw the cable harness from at least the region of the seat rail into which a seat will be moved. Once the seat has been moved, the cable is reinserted into the seat rail up to the seat and reconnected to the seat distribution box. The cable harness is typically pulled to remove any slack and then connected to the next seat distribution box. In the event that the pitch of the seats is decreased, any excess cable harness must be somehow accommodated within the seat rail or, if this is not possible, a shorter cable harness used. Conversely, if the pitch of the seats is increased and the existing cable harness is too short, then a longer cable harness must be provided. In any event, each connection then needs to be retested since the mechanical connection between the seat distribution box and the cable harness has been broken and remade.

An alternative arrangement provides so-called "spacers" which are rigid mechanical and electrical couplings of fixed length which couple with an interface provided within the legs of each seat. These spacers are retained in the inter-seat gap of the seat rail.

EP 0279 608 A2 discloses an information transmitting system capable of two way communication, suitable for use in transmitting information signals between a central control unit and a plurality of terminal apparatus units each located at a different passenger seat in an aircraft. Frequency multiplexed signals are supplied through a signal distributor to one end of a leaky cable. Each terminal apparatus unit is provided with an antenna which receives the frequency multiplexed signal leaking from the cable.

US 2006/0234700 A1 discloses an aircraft in-flight entertainment system which includes a head end unit and a plurality of seat electronic boxes spaced throughout the aircraft.

It is desired to provide an improved interconnect.

### SUMMARY OF THE INVENTION

According to a first aspect of the present invention there is provided a vehicle seat data interconnect, as claimed in claim 1.

The first aspect recognises that a problem with the approaches mentioned above is that the cable harness or spacer needs to be removed from the seat rail in the vehicle floor and disconnected from the seat distribution box each time a change in seat pitch is required. Removing the interconnect each time is extremely time-intensive and can result in a mechanical or electrical failure between the seat distribution box and the interconnect, leading to the non-functioning of the entertainment system. Also, another problem with the approaches mentioned above is that a large inventory of different length interconnects needs to be provided in order to accommodate all the different possible combinations of pitches that may be required. Hence, the flexibility of the seat layouts can be severely restricted due to the lack of availability of cables or spacers of the correct length.

Accordingly, an elongate medium is provided which is operable to propagate signals along its length. This medium may be retained substantially along the entire length of the seat rail. A transceiver may be provided on a vehicle seat and which couples with the elongate medium to enable data signals to be wirelessly transmitted therebetween. It will be appreciated that this arrangement enables the seat pitch to be altered without the need to remove the cabling or to disconnect from the seat distribution box each time. Instead, the seat may be moved to a new position and the transceiver may still wirelessly couple with the elongate medium. Hence, the elongate medium can be retained within the seat rail without needing to be removed when the seat is moved and the transceiver located on the vehicle seat will enable data signals to be transmitted with the elongate medium even when the transceiver is in its new location.

In embodiments, the transceiver is a radio frequency transceiver. Hence, radio frequency (RF) communication can be achieved between the medium and the transceiver through the transmission of RF signals therebetween to enable the wireless communication.

In embodiments, the transceiver is operable to receive radio frequency data signals from the elongate medium. Hence, the transceiver may receive RF data signals which have been propagated along the elongate member.

In embodiments, the transceiver is operable to transmit radio frequency data signals into the elongate medium. Hence, the transceiver may transmit RF signals into the elongate medium for propagation therein.

In embodiments, the transceiver is operable to couple with a seat distribution box. Hence, the transceiver may be coupled with a seat distribution box which receives or transmits data signals.

The elongate medium has unshielded areas through which the data signals are transmittable. Hence, portions or regions may be provided in the elongate medium which are unshielded, wireless communication can therefore be achieved between the elongate medium and the transceiver in the vicinity of these portions or regions. Providing shielding elsewhere helps to minimise any interference with other devices or cabling in the vicinity, which is a key concern in some safety critical environments.

The unshielded areas are spaced along the elongate medium. Hence, the unshielded areas may be provided at particular predetermined spaced intervals along the elongate medium. This enables wireless communication to occur at any of a variety of different predetermined locations along the length the elongate medium and provides increased flexibility in the positioning of the seat.

The unshielded areas are spaced along the elongate medium with a spacing which matches a pitch spacing of the vehicle seat. By matching the location of the unshielded areas to coincide with the step spacing provided in a seat rail supporting the seat, the correct alignment of the transceiver with the unshielded area may be achieved for any pitch set for the seats on that seat rail.

In embodiments, the elongate medium is a leaky cable. Providing a leaky cable, such as a coaxial cable having portions omitted from the cable shielding, conveniently enables local and limited wireless communication to be achieved between the cable and the transceiver.

In embodiments, the elongate medium couples with a distribution box. Hence, the transceiver may be coupled with an area or a floor distribution box which receives and/or transmits data signals such as control and audio-visual multiplexes associated with an entertainment system.

### BRIEF DESCRIPTION OF THE DRAWINGS

Embodiments of the present invention will now be described with reference to the accompanying drawings in which:
Figure 1 is a side elevation of an existing arrangement showing seats on a seat rail;
Figure 2 is a cross section of the seat rail and supporting structure;
Figure 3 is a plan view of a portion of the seat rail; and
Figure 4 is a side elevation schematically illustrating the vehicle seat interconnect and system according to one embodiment.

### DESCRIPTION OF THE EMBODIMENTS

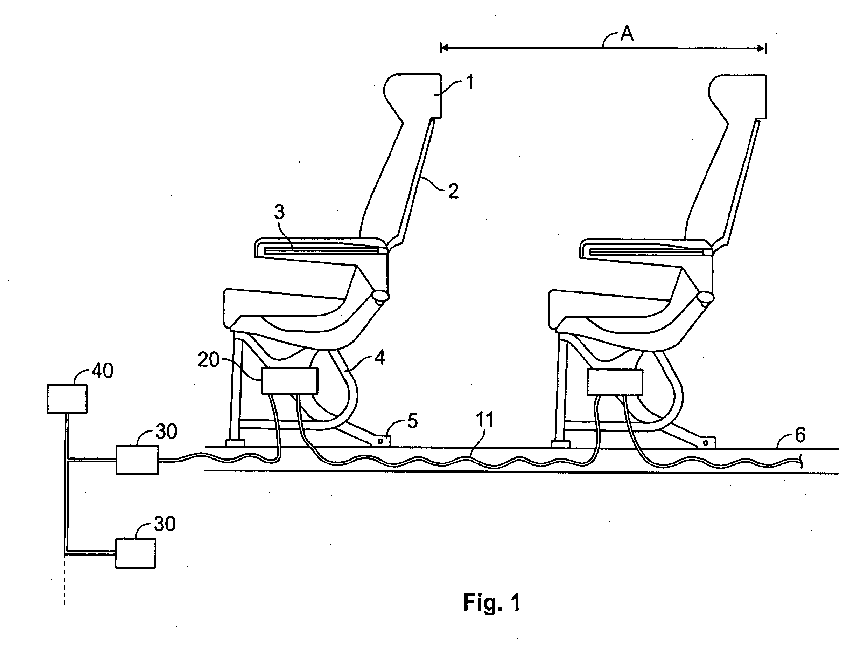

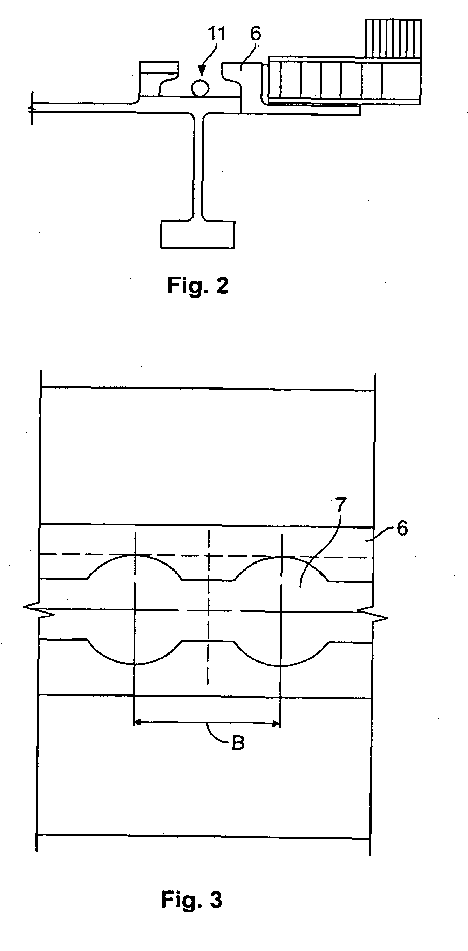

Figure 1 is a side elevation of an existing arrangement showing seats 1 on a seat rail 6. The seat rail 6 is mounted with the floor of the vehicle. The legs 4 of the seat 1 are mounted in the seat rail 6 and fixed in position using seat fixings 5. The seat fixings 5 engage in recesses 7 of the seat rail 6 (shown in more detail in Figure 3) to lock the seat 1 in position. The pitch A is the distance between the seats 1 and may be varied to suit different configuration needs of the vehicle housing the seats 1.

The armrest of the seat 1 will typically house control devices 3 for interaction with a vehicle information system such as, for example, a floor distribution box 30 and an area distribution box 40 of an in-flight entertainment system. The control devices 3 will typically operate a visual display unit 2 mounted in the seat ahead. Hence, signals will need to pass between seats. To achieve this each seat or row of seats is provided with a seat distribution box 20 which is coupled with the control devices 3 and the visual display unit 2. The seat distribution box 20 will also be coupled with adjacent seat distribution boxes via a cable harness 11. The cable harness 11 runs in a conduit provided in the seat rail 6. The cable harness 11 is protected by a track cover (not shown) which is mounted over the seat rail 6 for safety reasons. The cable harness 11 is coupled with the floor distribution box 30, which in turn is coupled with the area distribution box 40. The area distribution box 40 and floor distribution boxes 30 enable the entertainment system to be controlled and distributed throughout the vehicle.

Figure 2 shows a cross-section of the vehicle floor which includes the seat rail 6. As can be seen, the wiring harness 11 is retained within the seat rail 6 in at least the regions between seats 1.

Figure 3 shows in more detail a plan view of the seat rail 6. In particular, the seat rail 6 is provided with a number of recesses 7 for receiving the seat mountings 5. Typically, the spacing between these recesses 7 (known as the step) is fixed. A typical step B is 1" (25.4mm).

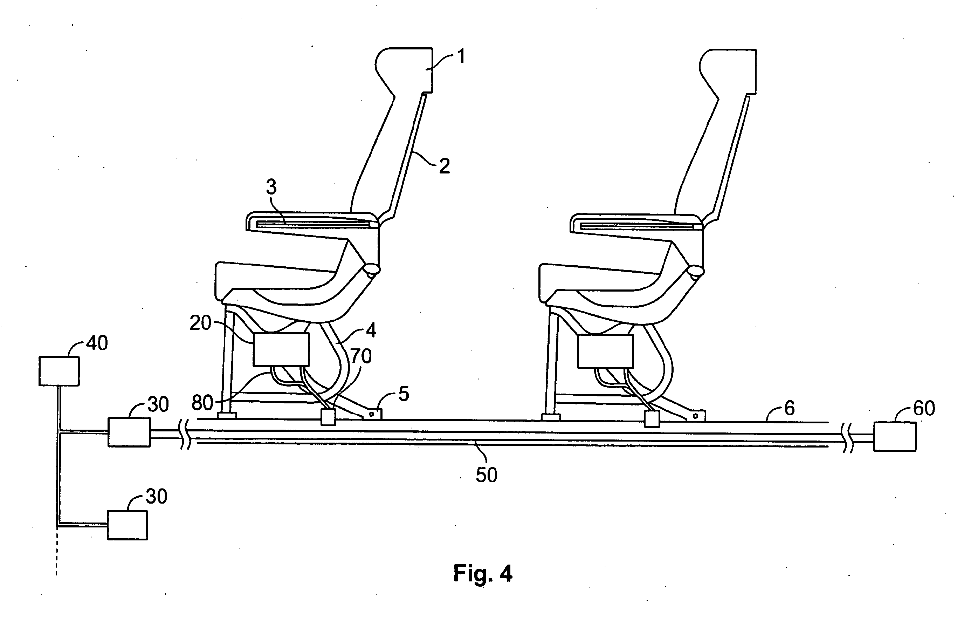

Figure 4 illustrates a vehicle seat data system according to one embodiment. The vehicle seat 1 itself is identical to the seat 1 shown in Figure 1. Also, the seat distribution box 20, area distribution box 40 and floor distribution boxes 30 are identical to that shown in Figure 1. However, the interconnect between the seat distribution box 20 and the floor distribution box 30 differs.

A leaky cable 50 is provided within the seat rail 6. The leaky cable 50 is typically retained within a conduit of the seat rail 6. However, it will be appreciated that the leaky cable 50 may be provided outside or adjacent the seat rail 6, if that would be more convenient. The leaky cable 50 is a coaxial cable operable to carry RF signals. The leaky cable 50 will typically be provided with unshielded apertures along the cable length to enable the transmission of RF signals from and into the leaky cable 50. These apertures will typically be spaced at a distance which matches the step B of the seat rail 6. The leaky cable 50 is coupled at one end with floor distribution box 30, which transmits and receives RF signals used by the in-flight entertainment system and is terminated at the other end by a terminator 60 to reduce signal reflections.

Attached to the seat 1 is a transducer 70. The transducer 70 is operable to couple wirelessly with the leaky cable 50 to enable RF signals to be transmitted between the transducer 70 and the leaky cable 50. The transducer 70 then provides these signals over a wiring harness 80 to the seat distribution box 20.

Hence, it can be seen that the leaky cable 50, the transducer 70 and the cable harness 80 act as a direct replacement for the wiring harness 11. Furthermore, the arrangement illustrated in Figure 4 has significant advantages in that when the pitch A of the seats 1 is changed, this can be done without having to disconnect any cables from the seat distribution box 20. Furthermore, the arrangements can enable any pitch A to be selected without needing any specific cable length dedicated to that particular pitch. It will be appreciated that this significantly simplifies changing the pitch A of the seats since none of the cabling infrastructure needs to be disturbed. Also, by providing a leaky cable 50 with spaced unshielded portions, the amount of interference generated by the leaky cable 50 is minimised. Furthermore, by matching the spacing of the unshielded portions to the step of the seat rail 6 the mechanical alignment of the transducer 70 with the leaky cable 50 can be assured. Accordingly, the need to comprehensively test the in-flight entertainment system following a change in pitch A can be obviated. Also, in the event that one seat distribution box 20 develops a fault, normal operation of other rows of seats can be maintained whereas in the arrangement shown in Figure 1, a faulty seat distribution box 20 can often cause a failure for some or all devices connected to the associated floor distribution box 30.

Hence, embodiments enable the seat pitch A to be altered without the need to remove any cabling or to disconnect the interconnect each time. Instead, the seat 1 may be moved to a new position and the transceiver 70 may still wirelessly couple with the elongate medium 50. The elongate medium 50 can be retained in place without needing to be removed when the seat 1 is moved and the transceiver 70 located on the vehicle seat 1 will enable data signals to be transmitted with the elongate medium 50 even when the transceiver 70 is in its new location.

Although a particular embodiment has been described herein it will be apparent that that invention is not limited thereto, and that many modifications and additions may be made within the scope of the invention. For example, various combinations of the features from the following dependent claims could be made with features of the independent claims without departing from the scope of the present invention.

## Claims

1. A vehicle seat data interconnect, comprising:
an elongate medium (50) operable to propagate data signals along its length; and
a transceiver (70) suitable for location with a vehicle seat (1) and suitable for retention on a seat rail (6), the transceiver (70) operable to wirelessly couple with said elongate medium to enable data signals to be transmitted between said transceiver and said elongate medium, **characterised in that** said elongate medium has unshielded areas through which said data signals are transmittable and is shielded elsewhere, said unshielded areas being spaced along said elongate medium with a spacing which matches a step spacing between recesses of said seat rail which receives said vehicle seat.

2. The vehicle seat data interconnect of claim 1, wherein said transceiver is a radio frequency transceiver.

3. The vehicle seat data interconnect of claim 2, wherein said transceiver is operable to receive radio frequency data signals from said elongate medium.

4. The vehicle seat data interconnect of claim 2 or claim 3, wherein said transceiver is operable to transmit radio frequency data signals into said elongate medium.

5. The vehicle seat data interconnect of any preceding claim, wherein said transceiver is operable to couple with a seat distribution box (20).

6. The vehicle seat data interconnect of any preceding claim, wherein said elongate medium is a leaky cable.

7. The vehicle seat data interconnect of any preceding claim, wherein said elongate medium is operable to couple with a distribution box (30; 40).

8. A vehicle seat data interconnect system, comprising:
the vehicle seat data interconnect of any preceding claim;
a distribution box (30;40), said elongate medium being coupled with said distribution box to enable data signals to be transmitted between said distribution box and said elongate medium; and
a seat distribution box (20) coupled with said transceiver to enable data signals to be transmitted between said seat distribution box and said elongate medium.

9. The vehicle seat data interconnect system of claim 8, comprising:
a vehicle seat rail (6) arranged to receive said vehicle seat and within which said elongate medium is provided.

## Patentansprüche

1. Fahrzeugsitz-Datenverbindung, umfassend:
ein gestrecktes Medium (50), das betriebsfähig ist, Datensignale entlang seiner Länge auszubreiten; und
einen Sendeempfänger (70), der zur Anordnung an einem Fahrzeugsitz (1) geeignet ist und zum Arretieren an einer Sitzschiene (6) geeignet ist, wobei der Sendeempfänger (70) betriebsfähig ist, drahtlos mit dem gestreckten Medium zu koppeln, um zu ermöglichen, dass Datensignale zwischen dem Sendeempfänger und dem gestreckten Medium übertragen werden, **dadurch gekennzeichnet, dass** das gestreckte Medium nicht abgeschirmte Bereiche hat, durch welche die Datensignale übertragbar sind, und anderswo abgeschirmt ist, wobei die nicht abgeschirmten Bereiche entlang dem gestreckten Medium beabstandet sind, und zwar in einem Abstand, der mit einem Schrittabstand zwischen Aussparungen der Sitzschiene, die den Fahrzeugsitz aufnimmt, übereinstimmt.

2. Fahrzeugsitz-Datenverbindung nach Anspruch 1, worin der Sendeempfänger ein Funkfrequenz-Sendeempfänger ist.

3. Fahrzeugsitz-Datenverbindung nach Anspruch 2, worin der Sendeempfänger betriebsfähig ist, Funkfrequenz-Datensignale von dem gestreckten Medium zu empfangen.

4. Fahrzeugsitz-Datenverbindung nach Anspruch 2 oder 3, worin der Sendeempfänger betriebsfähig ist, Funkfrequenz-Datensignale in das gestreckte Medium zu übertragen.

5. Fahrzeugsitz-Datenverbindung nach einem der vorhergehenden Ansprüche, worin der Sendeempfänger betriebsfähig ist, mit einer Sitz-Verteilerdose (20) zu koppeln.

6. Fahrzeugsitz-Datenverbindung nach einem der vorhergehenden Ansprüche, worin das gestreckte Medium ein Leckkabel ist.

7. Fahrzeugsitz-Datenverbindung nach einem der vorhergehenden Ansprüche, worin das gestreckte Medium betriebsfähig ist, mit einem Verteilerkasten (30; 40) zu koppeln.

8. Fahrzeugsitz-Datenverbindungssystem, umfassend:
die Fahrzeugsitz-Datenverbindung nach einem der vorhergehenden Ansprüche;
einen Verteilerkasten (30; 40), wobei das gestreckte Medium mit dem Verteilerkasten gekoppelt ist, um zu ermöglichen, dass Datensignale zwischen dem Verteilerkasten und dem gestreckten Medium übertragen werden; und
eine Sitz-Verteilerdose (20), die mit dem Sendeempfänger gekoppelt ist, um zu ermöglichen, dass Datensignale zwischen der Sitz-Verteilerdose und dem gestreckten Medium übertragen werden.

9. Fahrzeugsitz-Datenverbindungssystem nach Anspruch 8, umfassend:
eine Fahrzeugsitzschiene (6), die dafür eingerichtet ist, den Fahrzeugsitz aufzunehmen, und innerhalb derer das gestreckte Medium bereitgestellt wird.

## Revendications

1. Dispositif d'interconnexion de données de sièges de véhicules, comprenant :
un support allongé (50) servant à propager des signaux de données le long de sa longueur ; et
un émetteur-récepteur (70) conçu pour être placé avec un siège de véhicule (1) et conçu pour être retenu sur une glissière de siège (6), l'émetteur-récepteur (70) étant adapté pour être couplé sans fil avec ledit support allongé pour permettre à des signaux de données d'être transmis entre ledit émetteur-récepteur et ledit support allongé, **caractérisé en ce que** ledit support allongé possède des zones non blindées à travers lesquelles lesdits signaux de données peuvent être transmis et est blindé à d'autres endroits, lesdites zones non blindées étant espacées le long dudit support allongé d'un espacement qui correspond à un espacement de pas entre les logements de ladite glissière de siège qui reçoit ledit siège de véhicule.

2. Dispositif d'interconnexion de données de sièges de véhicules selon la revendication 1, dans lequel ledit émetteur-récepteur est un émetteur-récepteur radiofréquence.

3. Dispositif d'interconnexion de onnées de sièges de véhicules selon la revendication 2, dans lequel ledit émetteur-récepteur est adapté pour recevoir des signaux de données de radiofréquence dudit support allongé.

4. Dispositif d'interconnexion de données de sièges de véhicules selon la revendication 2 ou la revendication 3, dans lequel ledit émetteur-récepteur est adapté pour transmettre des signaux de données de radiofréquence dans ledit support allongé.

5. Dispositif d'interconnexion de données de sièges de véhicules selon l'une quelconque des revendications précédentes, dans lequel ledit émetteur-récepteur est adapté pour être couplé à une boîte de distribution de sièges (20).

6. Dispositif d'interconnexion de données de sièges de véhicules selon l'une quelconque des revendications précédentes, dans lequel ledit support allongé est un câble à fuite.

7. Dispositif d'interconnexion de données de sièges de véhicules selon l'une quelconque es revendications précédentes, dans lequel ledit support allongé est adapté pour être couplé à une boîte de distribution (30 ; 40).

8. Système d'interconnexion de données de sièges de véhicules, comprenant :
l'interconnexion de données de siège de véhicule selon l'une quelconque des revendications précédentes ;
une boîte de distribution (30 ; 40), ledit support allongé étant couplé à ladite boîte de distribution pour permettre aux signaux de données d'être transmis entre ladite boîte de distribution et ledit support allongé ; et
une boîte de distribution de sièges (20) couplée audit émetteur-récepteur pour permettre aux signaux de données d'être transmis entre ladite boîte de distribution de sièges et ledit support allongé.

9. Système d'interconnexion des données de sièges de véhicules selon la revendication 8, comprenant :
une glissière de siège de véhicule (6) conçue pour recevoir ledit siège de véhicule et à l'intérieur de laquelle est placé ledit support allongé.
